(19) **Europäisches Patentamt**

**European Patent Office**

**Office européen des brevets**

(11) Veröffentlichungsnummer: **0 284 968 B1**

(12) # EUROPÄISCHE PATENTSCHRIFT

(45) Veröffentlichungstag der Patentschrift: **29.07.92**

(21) Anmeldenummer: **88104600.7**

(22) Anmeldetag: **23.03.88**

(51) Int. Cl.⁵: **C08G 69/46**

(54) Verfahren zur Entfernung von Caprolactam und dessen Oligomeren aus solches enthaltendem Polyamidgranulat.

(30) Priorität: **31.03.87 DE 3710803**

(43) Veröffentlichungstag der Anmeldung:
**05.10.88 Patentblatt 88/40**

(45) Bekanntmachung des Hinweises auf die
Patenterteilung:
**29.07.92 Patentblatt 92/31**

(84) Benannte Vertragsstaaten:
**BE CH DE ES FR GB IT LI NL**

(56) Entgegenhaltungen:
**CH-A- 415 943**
**DD-A- 91 566**
**DE-C- 1 660 289**

(73) Patentinhaber: **BASF Aktiengesellschaft**
**Carl-Bosch-Strasse 38**
**W-6700 Ludwigshafen(DE)**

(72) Erfinder: **Gunter, Pipper**
**Schlangenthaler Weg 10**
**W-6702 Bad Duerkheim(DE)**
Erfinder: **Cordes, Claus, Dr.**
**Halbergstrasse 13**
**W-6719 Weisenheim(DE)**

## Beschreibung

Polycaprolactam wird durch Polymerisation von ε-Caprolactam hergestellt. Hierbei fällt Polycaprolactam mit einem Gehalt an Caprolactam und dessen Oligomeren von z.B. von 8 bis 11 Gew.% an. Vor der Weiterverarbeitung des Polycaprolactams müssen die Monomeren und Oligomeren entfernt werden. Üblicherweise wird dies durch Extraktion mit Wasser bei erhöhter Temperatur bewerkstelligt. Hierbei fallen jedoch verdünnte wäßrige Lösungen von Caprolactam an, deren Aufarbeitung technisch aufwendig ist. Dies gilt auch für Polyamide, die aus Caprolactam und polyamidbildenden Diaminen und Dicarbonsäuren aufgebaut sind. Aus solchen Polyamiden müssen Caprolactam und dessen Oligomere soweit entfernt werden, um die für die weitere Verarbeitung erforderlichen Eigenschaften sicherzustellen.

Aus der DD-PS 91 566 ist auch bereits ein Verfahren zur Entfernung von Caprolactam und dessen Oligomeren aus Polyamid unter gleichzeitigem Tempern bekannt, wobei man Caprolactam und dessen Oligomere enthaltendes Polycaprolactam mit Stickstoff zunächst im Gleichstrom in einer ersten Zone erhitzt und dann in einer zweiten Zone mit Stickstoff im Gegenstrom bei erhöhter Temperatur behandelt. Hierbei sind jedoch erhebliche Gasmengen erforderlich, da der Partialdampfdruck des Caprolactams in keinem Fall bei der vorgegebenen Arbeitstemperatur erreicht werden darf. Zudem hat das Verfahren den Nachteil, daß Caprolactam aus großen Inertgasmengen wiedergewonnen werden muß.

Es war deshalb die technische Aufgabe gestellt, ein Verfahren zur Entfernung von Caprolactam und dessen Oligomeren aus solches enthaltenden Polyamiden zur Verfügung zu stellen, bei dem der Gehalt an monomerem Caprolactam und dessen Oligomeren in den Polyamiden auf den gewünschten Gehalt gesenkt und zugleich gegebenenfalls durch Tempern das Molekulargewicht erhöht wird, wobei keine flüssigen Extraktionsmittel nötig sind und die Menge an gasförmigem Extraktionsmittel relativ niedrig ist und zugleich monomeres Caprolactam und dessen Oligomere in leicht wiederverwendbarer Form zurückgewonnen werden.

Diese Aufgabe wird gelöst in einem Verfahren zur Entfernung von Caprolactam und dessen Oligomeren aus solches enthaltendem Polyamidgranulat durch Behandeln mit Inertgasen bei erhöhter Temperatur, wobei man

a) Polyamidgranulat mit einer Temperatur von mindestens 100°C in eine im wesentlichen senkrecht stehende Behandlungszone oben einbringt

b) Polyamidgranulat von oben nach unten unter Erhitzen auf eine Temperatur von 130 bis 210°C durch die Behandlungszone leitet

c) durch die Behandlungszone von unten nach oben überhitzten Wasserdampf mit einer Temperatur von 130 bis 210°C leitet

d) aus der Behandlungszone unten trockenes Polyamidgranulat und oben Caprolactam und dessen Oligomere enthaltenden Wasserdampf entnimmt

e) den so erhaltenen Caprolactam und dessen Oligomere enthaltenden Wasserdampf durch eine Kolonne leitet und als Kolonnensumpf eine wäßrige Lösung von Caprolactam und dessen Oligomeren und am Kopf einen praktisch Caprolactam-freien Wasserdampf erhält.

Das neue Verfahren hat den Vorteil, daß der Gehalt an Caprolactam und dessen Oligomeren im Polyamidgranulat auf einfache Weise auf den gewünschten Gehalt gesenkt wird. Weiter hat das neue Verfahren den Vorteil, daß relativ geringe Mengen an Dampf benötigt werden und Caprolactam und dessen Oligomere in leicht wiederverwendbarer Form anfallen. Ferner hat das neue Verfahren den Vorteil, daß das Polyamidgranulat zugleich getrocknet und getempert wird.

Geeignete Polyamide sind Polycaprolactam oder Copolyamide aufgebaut aus Caprolactam und weiteren polyamidbildenden Ausgangsstoffen wobei der Anteil der sich von Caprolactam ableitet vorzugsweise mindestens 20 Gew.%, insbesondere mindestens 25 Gew.% beträgt. Bevorzugte polyamidbildende Ausgangsstoffe sind Diamine und Dicarbonsäuren die zur Bildung von Polyamiden geeignet sind. Geeignete Dicarbonsäuren sind beispielsweise Alkandicarbonsäuren mit 6 bis 12 Kohlenstoffatomen, insbesondere 6 bis 10 Kohlenstoffatomen, Terephthalsäure und Isophthalsäure. Geeignete Diamine sind beispielsweise Alkandiamine mit 4 bis 12, insbesondere mit 6 bis 8 Kohlenstoffatomen, ferner m-Xylylendiamin, Bis-(4-aminophenyl)methan, Bis-(4-aminophenyl)-propan-2,2 oder Bis-(4-aminocyclohexyl)methan. Dicarbonsäuren und Diamine können jeweils für sich in beliebigen Kombinationen verwendet werden, im Verhältnis zueinander liegen sie jedoch vorteilhaft im äquivalenten Verhältnis vor. Besondere technische Bedeutung haben Polycaprolactam, Polyamide, die aus Caprolactam, Hexamethylendiamin sowie Adipinsäure, Isophthalsäure und/oder Terephthalsäure aufgebaut sind, erlangt.

Die verwendeten Polyamide können zusätzlich übliche Additive wie Mattierungsmittel, z.B. Titandioxid, Keimbildner, z.B. Magnesiumsilikat, Stabilisatoren, z.B. Kupfer(I)halogenide und Alkalihalogenide, Antioxydantien sowie Verstärkungsmittel in üblichen Mengen enthalten. Die Additive werden in der Regel vor dem Granulieren vor, während oder nach der Polymerisation zugesetzt.

Polyamidgranulat wird mit einer Temperatur von mindestens 100°C in eine im wesentlichen senkrecht stehende Behandlungszone oben eingebracht. In der Regel geht man von Polyamidgranulat mit einem Gehalt von 2 bis 15 Gew.% Caprolactam und dessen Oligomeren, insbesondere 8 bis 12 Gew.% Caprolactam und dessen Oligomeren aus. Im allgemeinen hat das Polyamidgranulat eine Granulatgröße von 1,5 x 1,5 mm bis 4 x 4 mm und einem Wassergehalt von 0,5 bis 3 Gew.%. Vorteilhaft bringt man das Polyamidgranulat mit einer Temperatur von 100 bis 150°C, insbesondere 105 bis 120°C, oben in die Behandlungszone ein. Zweckmäßig wird dies bewerkstelligt indem man die Zuführungsleitung für das Polyamidgranulat mit dem verwendeten überhitzten Wasserdampf beheizt oder die Aufheizung durch einen geeigneten Wärmetauscher vornimmt oder die Granulierung so durchführt, daß ein Polyamidgranulat mit einer Temperatur von über 100°C anfällt. Die Behandlungszone hat in der Regel ein Verhältnis von Länge:Durchmesser von 7:1 bis 15:1. Die Verweilzeit des Polyamidgranulats in der Behandlungszone beträgt z.B. 20 bis 60 Stunden, insbesondere 25 bis 50 Stunden.

Das Polyamidgranulat wird von oben nach unten unter Erhitzen auf eine Temperatur von 130 bis 210°C, insbesondere 160 bis 190°C durch die Behandlungszone geleitet. Vorteilhaft hält man eine Temperatur von 20 bis 60°C unterhalb des Schmelzpunktes des jeweiligen Polyamids ein. Das Polyamidgranulat durchwandert die Behandlungszone mittels Schwerkraft in dem Maße, wie unten aus der Behandlungszone Polyamidgranulat entnommen wird. Es versteht sich, daß in dem gleichen Maße oben Polyamidgranulat zugeführt wird.

Durch die Behandlungszone wird von unten nach oben überhitzter Wasserdampf mit einer Temperatur von 130 bis 210°C, insbesondere 160 bis 190°C geleitet. Durch den überhitzten Wasserdampf wird das Polyamidgranulat auf die gewünschte Temperatur aufgeheizt und monomeres Caprolactam sowie dessen Oligomere sowie anhaftendes Wasser entfernt. Vorteilhaft wendet man je kg Polyamidgranulat und Stunde 2 bis 10, insbesondere 2,5 bis 8 kg überhitzten Wasserdampf an. Vorteilhaft hält man in der Behandlungszone einen Druck von 1,05 bis 1,1 bar ein. Es versteht sich, daß man die Bedingungen so aufeinander abstimmt, daß Wasser nicht in flüssiger Phase vorliegt.

Aus der Behandlungszone wird unten trockenes Polyamidgranulat, z.B. mit einem Wassergehalt von weniger als 0,5 Gew.%, insbesondere 0,2 bis 0,04 Gew.%, zweckmäßig nach Abkühlen auf Raumtemperatur z.B. über eine Schleuse entnommen, in dem Maße wie oben Polyamidgranulat zufließt. Am oberen Ende der Behandlungszone wird Caprolactam und dessen Oligomere enthaltender Wasserdampf abgeführt.

Der so erhaltene Caprolactam und dessen Oligomere enthaltende Wasserdampf wird durch eine Kolonne geleitet und als Kolonnensumpf eine wäßrige Lösung von Caprolactam und dessen Oligomeren und am Kopf ein praktisch Caprolactamfreier Wasserdampf erhalten. Die im Kolonnensumpf anfallende wäßrige Lösung hat in der Regel einen Gehalt von 50 bis 60 Gew.%, insbesondere 60 bis 70 Gew.% an Caprolactam und dessen Oligomeren. Diese Lösung wird zweckmäßig so wie sie anfällt oder vorteilhaft nach Konzentrierung auf einen Gehalt von über 90 Gew.% wieder ohne weitere Reinigung der Polymerisation von Caprolactam im VK-Rohr zugeführt. Vorteilhaft verwendet man eine Kolonne mit 5 bis 15 theoretischen Böden, z.B. Glockenboden-Kolonnen, Füllkörperkolonnen oder Siebbodenkolonnen. Im Sumpf hält man vorteilhaft eine Temperatur von 95 bis 120°C, am Kopf der Kolonne eine Temperatur von 120 bis 150°C ein. Vorteilhaft hält man in der Kolonne einen Druck von 1,01 bis 1,03 bar ein.

Vorteilhaft wird der am Kopf der Kolonne anfallende Wasserdampf nach Erhitzen auf eine Temperatur von 130 bis 210°C wieder in die Behandlungszone zurückgeführt. Es hat sich auch bewährt wenn der verwendete Wasserdampf einen Gehalt an molekularen Sauerstoff von < 10 ppm, insbesondere < 5 ppm hat.

Nach dem erfindungsgemäßen Verfahren läßt sich in Abhängigkeit vom Extraktgehalt des Ausgangspolyamids durch Variation der Wasserdampfmenge, der Temperatur und der Verweilzeit ein für den jeweiligen Verwendungszweck des Polyamids geeigneter Monomerengehalt einstellen. So lassen sich z.B. technisch interessante Produkte mit z.B. 7 bis 8 Gew.% extrahierbaren Anteilen für spezielle Monofile oder 0,5 bis 1,2 Gew.% extrahierbaren Anteilen für Fasern oder Folien herstellen. Die erfindungsgemäß behandelten Polyamide haben sich in der praktischen Anwendung besonders bewährt im Hinblick auf den niederen Gehalt an monomerem Caprolactam und Dimeren.

Das Verfahren nach der Erfindung sei an folgendem Beispiel veranschaulicht.

Beispiel 1

Es wird eine senkrechtstehende rohrförmige Extraktionsvorrichtung verwendet, die unten konisch zuläuft und einen Auslauf besitzt und oben ein Zuführungsrohr für Polycaprolactamgranulat aufweist, das 25 % der Länge des Extraktionsrohres in dieses hineinreicht. Ferner weist das Extraktionsrohr unten eine Zuführung für überhitzten Wasserdampf und oben eine Ableitung für diesen auf. Von oben werden stündlich 3,3 kg feuchtes Polycaprolactamgranulat mit einem Extraktgehalt von 10,5 Gew.% (monomeres Caprolactam und Oligomere) mit einem K-Wert von 70 zugeführt. Im Verlauf des in das Extraktionsrohr hineinreichenden Zuführungsrohrs wird das Polycaprolactamgranulat durch den überhitzten Wasserdampf auf eine Temperatur von 120°C erhitzt und tritt dann in das Extraktionsrohr ein. Von unten führt man stündlich 10 kg überhitzten Wasserdampf von 180°C zu, der das nach unten wandernde Granulat auf eine Temperatur von 170 (unten) bis 165°C (oben) erhitzt. Am unteren konischen Ende wird über ein Fallrohr, das mit Stickstoff beschickt wird, extrahiertes Polycaprolactamgranulat mit einem Restextraktgehalt von 1,3 bis 1,7 Gew.%, einer Restfeuchte <0,1 Gew.% und einem K-Wert von 74 bis 76 entnommen. Der am oberen Ende des Extraktionsrohres austretende Caprolactam und dessen Oligomere enthaltende Wasserdampf wird unten in eine Kolonne mit 10 theoretischen Böden geleitet. Am Kopf der Kolonne hält man eine Temperatur von 105°C und im Sumpf der Kolonne eine Temperatur von 98°C ein. Als Kolonnensumpf erhält man stündlich 400 g einer wäßrigen Lösung die 70 Gew.% Caprolactam und dessen Oligomere enthält. Am Kopf der Kolonne fällt Wasserdampf mit einem Gehalt < 0,5 Gew.% Caprolactam an. Dieser wird wiederum gegebenenfalls nach Ergänzung von Wasserdampf auf eine Temperatur von 180°C aufgeheizt und in das Extraktionsrohr zurückgeführt.

Beispiel 2

In die unter Beispiel 1 beschriebene Extraktionsvorrichtung werden stündlich 3,5 kg feuchtes Polyamidgranulat, hergestellt aus Caprolactam und Terephthalsäure/Hexamethylendiamin im Gewichtsverhältnis 3:7, mit einem Extraktanteil von 3,7 Gew.% (monomeres Caprolactam und Oligomere) und einem K-Wert von 56,0 zugeführt. Analog Beispiel 1 wird das Polymergranulat in das Extraktionsrohr eingetragen und mit 10 kg überhitztem Wasserdampf im Gegenstrom behandelt. Der Wasserdampf hat eine Temperatur von 205°C und erhitzt das nach unten wandernde Granulat auf eine Temperatur von 198 bis 202°C. Das Granulat wird wie in Beispiel 1 beschrieben ausgetragen. Der Restextrakt beträgt hierbei 0,3 bis 0,4 Gew.%, die Restfeuchte < 0,1 Gew.%, der K-Wert liegt zwischen 66,0 und 68,0. Das am oberen Ende des Rohres austretende Brüdengemisch wird analog Beispiel 1 in einer Kolonne aufgetrennt. Als Kolonnensumpf erhält man stündlich 170 g einer wäßrigen Lösung, die 70 Gew.% Caprolactam und dessen Oligomeren enthält. Analog Beispiel 1 wird der Dampf erhitzt bis auf eine Temperatur von 203°C und wieder in das Extraktionsrohr zurückgeführt.

**Patentansprüche**

1. Verfahren zur Entfernung von Caprolactam und dessen Oligomeren aus solches enthaltendem Polyamidgranulat durch Behandeln mit Inertgasen bei erhöhter Temperatur, dadurch gekennzeichnet, daß man
   a) Polyamidgranulat mit einer Temperatur von mindestens 100°C in eine im wesentlichen senkrecht stehende Behandlungszone oben einbringt
   b) Polyamidgranulat von oben nach unten unter Erhitzen auf eine Temperatur von 130 bis 210°C durch die Behandlungszone leitet
   c) durch die Behandlungszone von unten nach oben überhitzten Wasserdampf mit einer Temperatur von 130 bis 210°C leitet
   d) an der Behandlungszone unten trockenes Polyamidgranulat und oben Caprolactam und dessen Oligomere enthaltenden Wasserdampf entnimmt
   e) den so erhaltenen Caprolactam und dessen Oligomere enthaltenden Wasserdampf durch eine Kolonne leitet und als Kolonnensumpf eine wäßrige Lösung von Caprolactam und dessen Oligomeren und am Kopf praktisch Caprolactam-freien Wasserdampf erhält.

2. Verfahren nach Anspruch 1, dadurch gekennzeichnet, daß man für das Polyamidgranulat eine Verweilzeit in der Behandlungszone von 25 bis 50 Stunden einhält.

3. Verfahren nach den Ansprüchen 1 und 2, dadurch gekennzeichnet, daß man überhitzten Wasserdampf mit einer Temperatur von 160 bis 190°C verwendet.

4. Verfahren nach den Ansprüchen 1 bis 3, dadurch gekennzeichnet, daß man je kg Polyamidgranulat und Stunde 2 bis 10 kg überhitzten Wasserdampf verwendet.

5. Verfahren nach den Ansprüchen 1 bis 4, dadurch gekennzeichnet, daß man die als Kolonnensumpf anfallende wäßrige Lösung von Caprolactam und dessen Oligomeren ohne weitere Reinigung wiederum für die Polymerisation von Caprolactam verwendet.

6. Verfahren nach den Ansprüchen 1 bis 5, dadurch gekennzeichnet daß man den am Kopf der Kolonne erhaltenen Wasserdampf nach Erhitzen auf eine Temperatur von 130 bis 210°C wieder in die Behandlungszone zurückführt.

## Claims

1. A process for removing caprolactam and oligomers thereof from polyamide granules containing same by treatment with an inert gas at elevated temperatures, wherein
   a) polyamide granules are introduced at not less than 100°C at the top of a substantially upright treatment zone,
   b) polyamide granules are passed downward through the treatment zone while being heated to from 130 to 210°C,
   c) superheated steam is passed at from 130 to 210°C upward through the treatment zone,
   d) dry polyamide granules are withdrawn at the bottom end of the treatment zone and steam containing caprolactam and oligomers thereof is withdrawn at the top of the treatment zone,
   e) the steam thus obtained, containing caprolactam and oligomers thereof, is passed through a column giving an aqueous solution of caprolactam and oligomers thereof as bottom product and virtually caprolactam-free steam as overhead product.

2. A process as claimed in claim 1, wherein a residence time of 25 to 50 hours in the treatment zone is maintained for the polyamide granules.

3. A process as claimed in either of claims 1 and 2, wherein superheated steam at from 160 to 190°C is used.

4. A process as claimed in any of claims 1 to 3, wherein from 2 to 10 kg of superheated steam are used per kg of polyamide granules per hour.

5. A process as claimed in any of claims 1 to 4, wherein the aqueous solution of caprolactam and oligomers thereof which is obtained as the bottom product is reused for the polymerisation of caprolactam without further purification.

6. A process as claimed in any of claims 1 to 5, wherein the steam obtained at the top of the column is heated to from 130 to 210°C and returned into the treatment zone.

## Revendications

1. Procédé d'élimination de caprolactame et d'oligomères de celui-ci dans des granulés de polyamide qui les contiennent, par traitement par des gaz inertes à température élevée, caractérisé en ce que
   a) on introduit en haut le granulé de polyamide, à une température d'au moins 100°C dans une zone de traitement sensiblement verticale,
   b) on fait passer le granulé de polyamide de haut en bas à travers la zone de traitement, avec chauffage à une température de 130 à 210°C,
   c) on envoie à travers la zone de traitement, de bas en haut, de la vapeur d'eau surchauffée à une température de 130 à 210°C,
   d) on prélève, en bas de la zone de traitement, du granulé de polyamide sec et, en haut de cette zone, de la vapeur d'eau contenant du caprolactame et des oligomères de celui-ci,
   e) on envoie à travers une colonne la vapeur d'eau ainsi obtenue, contenant du caprolactame et des oligomères de celui-ci, et on obtient, comme produit de bas de colonne, une solution aqueuse de caprolactame et d'oligomères de celui-ci et, en tête de la colonne, de la vapeur d'eau pratiquement exempte de caprolactame.

2. Procédé selon la revendication 1, caractérisé en ce qu'on maintient, pour le granulé de polyamide, une durée de séjour dans la zone de traitement de 25 à 50 h.

3. Procédé selon la revendication 1 ou 2, caractérisé en ce qu'on utilise de la vapeur d'eau surchauffée à une température de 160 à 190°C.

4. Procédé selon l'une quelconque des revendications 1 à 3, caractérisé en ce qu'on utilise, par kg de granulé de polyamide et par heure, de 2 à 10 kg de vapeur d'eau surchauffée.

5. Procédé selon l'une quelconque des revendications 1 à 4, caractérisé en ce qu'on réutilise sans autre purification la solution aqueuse de caprolactame et d'oligomères de celui-ci obtenue comme produit de bas de colonne, pour la polymérisation de caprolactame.

6. Procédé selon l'une quelconque des revendications 1 à 5, caractérisé en ce qu'on renvoie dans la zone de traitement, après chauffage à une température de 130 à 210°C, la vapeur d'eau obtenue en tête de la colonne.